# EUROPEAN PATENT SPECIFICATION

(11) **EP 3 978 698 B1**
(45) Date of publication and mention of the grant of the patent: **10.05.2023**
(21) Application number: 21200207.5
(22) Date of filing: 30.09.2021
(51) Int. Cl.: E04B 1/58, E04B 2/74, E04B 2/76, F16B 7/04, F16B 7/22, F16B 12/08, F16B 12/38, F16B 12/40, F16B 12/50

(54) **METAL FRAME**
METALLRAHMEN
CADRE MÉTALLIQUE

(30) Priority: 30.09.2020 IT 202000023071
(43) Date of publication of application: 06.04.2022
(73) Proprietor: BIESSE S.p.A., 61122 Pesaro (PU) (IT)
(72) Inventor: D'ETTORRE, Massimo, 61122 Pesaro (PU) (IT)
(74) Representative: Manconi, Stefano

(56) References cited:
- EP-A1- 3 456 987
- WO-A1-02/06618
- DE-A1- 19 609 722
- GB-A- 2 144 822

## Description

### CROSS-REFERENCE TO RELATED APPLICATIONS

This patent application claims priority from Italian patent application no. 102020000023071 filed on September 30, 2020.

### TECHNICAL FIELD

The present invention relates to a metal frame.

In particular, the present invention relates to a metal frame of the type comprising at least one first section bar which is provided with an end portion defining a first coupling portion; and at least one second section bar which is provided with a second coupling portion defined by an end portion or by an intermediate portion of said second section bar.

### BACKGROUND ART

Known metal frames of the type described above have some drawbacks mainly deriving from the fact that the connection of the coupling portions by welding is relatively expensive, has relatively long execution times, and does not allow preliminary painting of the section bars, and that the connection of the coupling portions by tightening screws/bolts has relatively long assembly times, entails the use of additional components, in this case tightening screws/bolts, and is, therefore, relatively expensive.

EP3456987A1 discloses a metal frame according to the preamble of appended claim 1.

### OBJECT OF THE INVENTION

The object of the present invention is to provide a metal frame that is free from the drawbacks described above and that is simple and inexpensive to implement.

According to the present invention, a metal frame is provided as claimed in the annexed claims.

### BRIEF DESCRIPTION OF THE DRAWINGS

The present invention will now be described with reference to the attached drawings, which illustrate a non-limiting embodiment thereof, wherein:
Figure 1 is a schematic perspective view, with parts removed for clarity, of a preferred embodiment of the metal frame of the present invention;
Figure 2 is a schematic perspective view of a first detail of the metal frame of Figure 1;
Figure 3 is a schematic perspective view, with parts enlarged for clarity, of a second detail of the metal frame of Figure 1;
Figure 4 is a schematic perspective view, with parts enlarged for clarity, of a third detail of the metal frame of Figure 1; and
Figure 5 is a schematic perspective view, with parts removed for clarity, of a variation of the metal frame of Figure 1.

### PREFERRED EMBODIMENT OF THE INVENTION

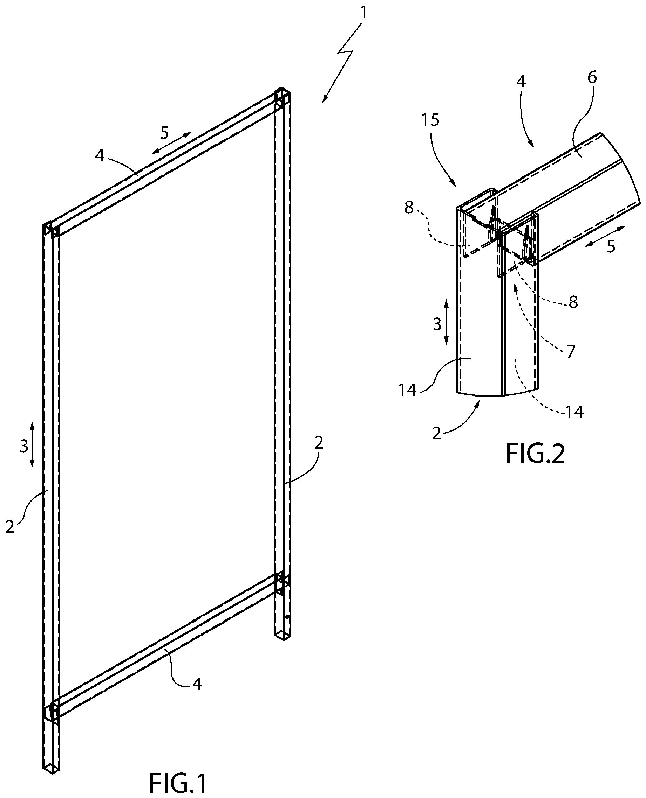

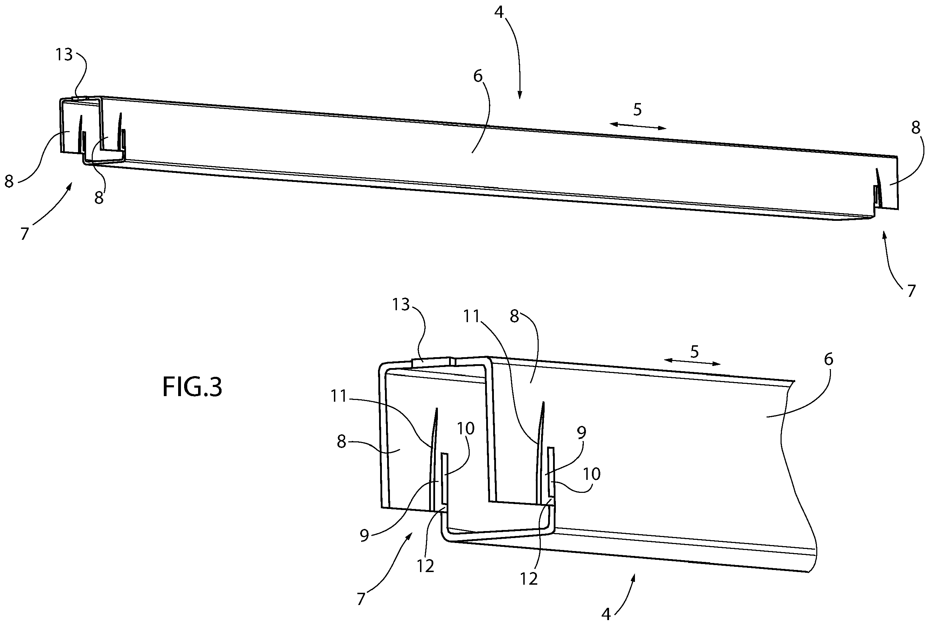

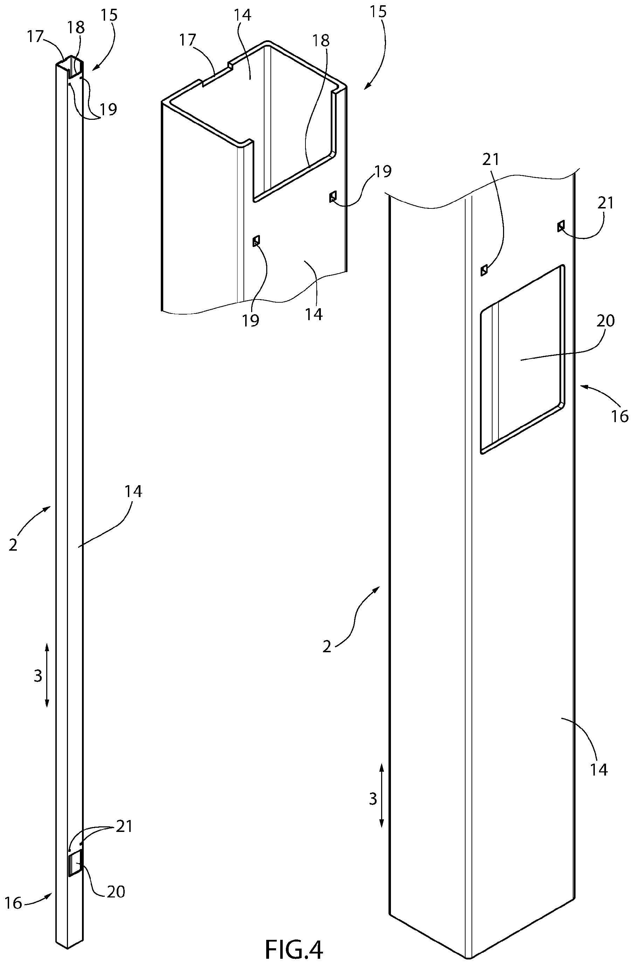

With reference to Figures 1, 2, 3, and 4, 1 denotes, as a whole, a metal frame comprising two metal section bars 2 substantially parallel to one another and to a direction 3, in this case substantially vertical, and two metal section bars 4 substantially parallel to one another and to a direction 5, in this case substantially horizontal, perpendicular to the direction 3 itself.

Each section bar 4 comprises a central portion 6 having a substantially quadrilateral cross-section, and is provided with two end portions 7 each defining a respective coupling portion of the section bar 4 with one of the section bars 2.

Each portion 7 has a U-shaped cross-section with a concavity facing the relative section bar 2, and is delimited by two side walls 8 substantially parallel to one another.

Each wall 8 is provided with an elastically deformable tongue 9 laterally delimited by two slits 10, 11 opposite one another, of which the slit 10 is obtained between the portion 6 and the wall 8 and the slit 11 is obtained through the wall 8 itself.

Furthermore, the tongue 9 is provided with a hooking tooth 12 projecting from the tongue 9 towards the portion 6.

Furthermore, the portion 7 is provided with a centring tooth 13 projecting from the section bar 4 in the direction 5.

Each section bar 2 has a substantially quadrilateral cross-section, and is delimited by two side walls 14 which are parallel to one another.

The section bar 2 is provided with an end portion 15 defining a coupling portion of the section bar 2 with one of the section bars 4, and is furthermore provided with an intermediate portion 16 defining a coupling portion of the section bar 2 with the other section bar 4.

At the portion 15, one of the walls 14 has a groove 17 for a relative tooth 13 and the other wall 14 has a groove 18 for the insertion of a relative section bar 4 and a pair of holes 19 designed to receive and retain the teeth 12 of the relative section bar 4 itself.

At the portion 16, one of the walls 14 has a substantially rectangular-shaped opening 20 configured to be engaged by the portion 7 of a relative section bar 4 and a pair of holes 21 designed to receive and retain the teeth 12 of the relative section bar 4 itself.

The coupling between the portion 7 of a section bar 4 and the portion 15 of a section bar 2 is carried out by inserting the wall 14 into the slits 10, elastically deforming the tongues 9, and engaging the hooking teeth 12 in the holes 19 and the centring tooth 13 in the groove 17.

The two section bars 2, 4, the groove 18, and the slits 10 are configured and sized such that the portion 7 is entirely housed in the portion 15 in both the direction 3 and the direction 5.

The coupling between the portion 7 of a section bar 4 and the portion 16 of a section bar 2 is carried out by inserting the portion 7 into the opening 20 and the wall 14 into the slits 10, elastically deforming the tongues 9, and engaging the hooking teeth 12 in the holes 21.

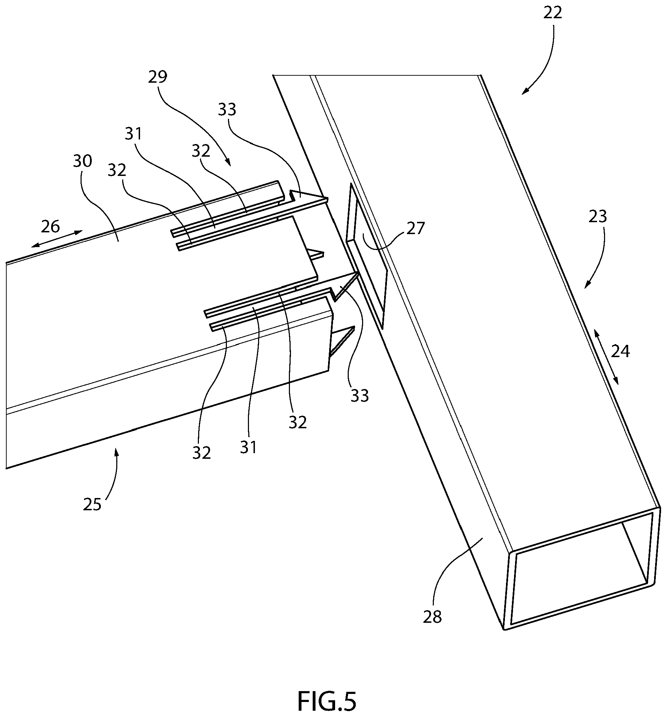

The variation illustrated in Figure 5 relates to a metal frame 22 comprising, in this case, a metal section bar 23 parallel to a direction 24 and a metal section bar 25 parallel to a direction 26 transversal to the direction 24 itself.

The section bar 23 has a substantially rectangular-shaped opening 27, which is obtained through a side wall 28 of the section bar 23, and defines a coupling portion of the section bar 23 with the section bar 25.

The section bar 25 has an end portion 29 defining a coupling portion of the section bar 25 with the section bar 23, and is delimited by two side walls 30 which are parallel to one another.

At the portion 29, each wall 30 is provided with two elastically deformable tongues 31, each of which is laterally delimited by two respective slits 32 opposite one another and obtained through the wall 30 itself.

Each tongue 31 projects from the section bar 25 in the direction 26, and has a hooking tooth 33 obtained on the free end of the tongue 31 itself.

The coupling between the end portion 29 and the opening 27 is carried out by moving the section bar 23 into contact with the section bar 25, inserting and elastically deforming the tongues 31 in the opening 27, and hooking the wall 28 by the teeth 33.

The frames 1, 22 have some advantages mainly deriving from the fact that the tongues 9, 31, the grooves 17, 18, and the openings 20, 27 are manufactured during the cutting and shaping machining of the section bars 2, 4, 23, 25 in a relatively simple and cost-effective manner, the section bars 2, 4, 23, 25 are painted before assembly thereof, and the coupling between the section bars 2, 4, 23, 25 is relatively simple and quick.

## Claims

1. A metal frame comprising at least one first section bar (4; 25) having an end portion, which defines a first coupling portion (7; 29) and is delimited by two first side walls (8; 30), which are substantially parallel to one another; and at least one second section bar (2; 23), which is provided with a second coupling portion (15; 16; 27) delimited by a second side wall (14; 28); wherein each first side wall (8; 30) is provided with at least one elastically deformable tongue (9; 31), which is laterally delimited by at least a first slit (10; 32) obtained through the first side wall (8; 30) and is provided with a hooking tooth (12; 33), which is designed to engage the second side wall (14; 28) following the coupling of the first coupling portion (7; 29) to the second coupling portion (15; 16; 27); and **characterized in that** each tongue (9; 31) is laterally delimited by a second slit (11; 32), which is obtained through the relative first side wall (8; 30) and is opposite the relative first slit (10; 32) .

2. A metal frame according to claim 1, wherein the second side wall (14) is provided, for each tongue (9), with a respective seat (19), which is designed to receive the relative hooking tooth (12) following a movement for the insertion of the second side wall (14) into said first slits (10).

3. A metal frame according to any one of the preceding claims, wherein the first coupling portion (7) is U-shaped with a concavity facing the second coupling portion (15).

4. A metal frame according to any one of the preceding claims, wherein the second coupling portion (15) is an end portion of the second section bar (2).

5. A metal frame according to any one of the claims from 1 to 3, wherein the second coupling portion (16) is obtained in an intermediate point of the second section bar (2).

6. A metal frame according to claim 5, wherein the second section bar (2) has an opening (20) for the insertion of the first coupling portion (7) into the second coupling portion (16) .

7. A metal frame according to any one of the preceding claims, wherein said first and second section bars (4; 2) extend in a first direction (5) and in a second direction (3), respectively; the first coupling portion (7) being contained in the second coupling portion (15; 16) both in the first direction (5) and in the second direction (3).

8. A metal frame according to claim 1, wherein the first section bar (25) extends in a first direction (26); each tongue (31) and the relative hooking tooth (33) projecting from the first coupling portion (29) in the first direction (26) so as to engage the second side wall (28).

9. A metal frame according to claim 8, wherein each first side wall (30) is provided with two tongues (31).

## Patentansprüche

1. Metallrahmen, umfassend wenigstens einen stabförmigen Abschnitt (4; 25) mit einem Endbereich, der ein erstes Kupplungsteil (7; 29) bildet, begrenzt ist durch zwei erste Seitenwände (8; 30), die im Wesentlichen parallel zueinander verlaufen; und wenigstens einen zweiten stabförmigen Abschnitt (2; 23), der von einem zweiten Kupplungsabschnitt (15;16; 27) durch eine zweite Seitenwand (14; 28) begrenzt ist; beide erste Seitenwände (8; 30) sind mit wenigstens einer elastisch verformbaren Zunge (19; 31) versehen, die seitlich begrenzt ist durch wenigstens einen ersten Spalt (10; 32), gebildet aus der ersten Seitenwand (8; 30) und mit einem Haken (12; 33), der gestaltet ist zum Erfassen der zweiten Seitenwand (14; 28), und der der Kupplung des ersten Kupplungsteiles (7; 29) zum zweiten Kupplungsabschnitt (15; 16; 27) folgt; **dadurch gekennzeichnet, dass** jede Zunge (9; 31) seitlich begrenzt ist von einem Spalt (11; 32), gebildet aus der ersten Seitenwand (8; 30), dem ersten Spalt (10; 32) gegenüberliegend.

2. Metallrahmen gemäß Anspruch 1, bei dem für jede Zunge (9) die zweite Seitenwand (14) mit einem entsprechenden Sitz (19) versehen ist, gestaltet zum Aufnehmen des betreffenden Hakens (12), der zum Einfügen der zweiten Seitenwand (14) in den ersten Spalt (10) eine Bewegung ausführt.

3. Metallrahmen gemäß einem der vorausgegangenen Ansprüche, wobei der erste Kupplungsbereich (7) U-förmig ist und eine Aussparung aufweist, die dem zweiten Kupplungsbereich (15) zugewandt ist.

4. Metallrahmen gemäß einem der vorausgegangenen Ansprüche, wobei der zweite Kupplungsbereich (15) ein Endabschnitt des zweiten stabförmigen Abschnittes (2) ist.

5. Metallrahmen gemäß einem der Ansprüche 1 bis 3, wobei der zweite Kupplungsabschnitt (16) an einer Stelle zwischen dem zweiten stabförmigen Abschnitt (2) aufgenommen ist.

6. Metallrahmen gemäß Anspruch 5, wobei der zweite stabförmige Abschnitt (2) eine Öffnung (20) zum Einfügen des ersten Kupplungsbereiches (7) in den zweiten Kupplungsabschnitt (16) aufweist.

7. Metallrahmen gemäß einem der vorausgegangenen Ansprüche, wobei die ersten und zweiten stabförmigen Abschnitte (4; 2) sich in eine erste Richtung (5) oder beziehungsweise in eine zweite Richtung (3) erstrecken, wobei der erste Kupplungsabschnitt (7) vom zweiten Kupplungsabschnitt (15; 16) in der ersten Richtung (5) und in der zweiten Richtung (3) aufgenommen sind.

8. Metallrahmen gemäß Anspruch 1, wobei sich der erste stabförmige Abschnitt (25) in der ersten Richtung (26) erstreckt; jede Zunge (31) und die betreffenden Haken (33) sich vom ersten Kupplungsabschnitt (29) in der ersten Richtung (26) erstrecken, um in die zweite Seitenwand (28) einzugreifen.

9. Metallrahmen gemäß Anspruch 8, wobei die beiden ersten Seitenwände (30) mit zwei Zungen (31) ausgestattet sind.

## Revendications

1. Cadre métallique comprenant au moins une première barre de section (4 ; 25) ayant une partie d'extrémité, qui définit une première partie d'accouplement (7 ; 29) et est délimitée par deux premières parois latérales (8 ; 30), qui sont sensiblement parallèles l'une à l'autre ; et au moins une seconde barre de section (2 ; 23), qui est dotée d'une seconde partie d'accouplement (15 ; 16 ; 27) délimitée par une seconde paroi latérale (14 ; 28) ; dans lequel chaque première paroi latérale (8 ; 30) est dotée d'au moins une languette (9 ; 31) déformable élastiquement, qui est délimitée latéralement par au moins une première fente (10 ; 32) obtenue à travers la première paroi latérale (8 ; 30) et est dotée d'une dent d'accrochage (12 ; 33), qui est conçue pour mettre en prise la seconde paroi latérale (14 ; 28) à la suite de l'accouplement de la première partie d'accouplement (7 ; 29) à la seconde partie d'accouplement (15 ; 16 ; 27) ; et **caractérisé en ce que** chaque languette (9 ; 31) est délimitée latéralement par une seconde fente (11 ; 32), qui est obtenue à travers la première paroi latérale (8 ; 30) relative et est opposée à la première fente (10 ; 32) relative.

2. Cadre métallique selon la revendication 1, dans lequel la seconde paroi latérale (14) est dotée, pour chaque languette (9), d'un siège (19) respectif, qui est conçu pour recevoir la dent d'accrochage (12) relative à la suite d'un mouvement pour l'insertion de la seconde paroi latérale (14) dans lesdites premières fentes (10).

3. Cadre métallique selon l'une quelconque des revendications précédentes, dans lequel la première partie d'accouplement (7) est en forme de U avec une concavité faisant face à la seconde partie d'accouplement (15).

4. Cadre métallique selon l'une quelconque des revendications précédentes, dans lequel la seconde partie d'accouplement (15) est une partie d'extrémité de la seconde barre de section (2).

5. Cadre métallique selon l'une quelconque des revendications 1 à 3, dans lequel la seconde partie d'accouplement (16) est obtenue en un point intermédiaire de la seconde barre de section (2).

6. Cadre métallique selon la revendication 5, dans lequel la seconde barre de section (2) a une ouverture (20) pour l'insertion de la première partie d'accouplement (7) dans la seconde partie d'accouplement (16).

7. Cadre métallique selon l'une quelconque des revendications précédentes, dans lequel lesdites première et seconde barres de section (4 ; 2) s'étendent dans une première direction (5) et dans une seconde direction (3), respectivement ; la première partie d'accouplement (7) étant contenue dans la seconde partie d'accouplement (15 ; 16) à la fois dans la première direction (5) et dans la seconde direction (3) .

8. Cadre métallique selon la revendication 1, dans lequel la première barre de section (25) s'étend dans une première direction (26) ; chaque languette (31) et la dent d'accrochage (33) relative faisant saillie depuis la première partie d'accouplement (29) dans la première direction (26) de manière à mettre en prise la seconde paroi latérale (28).

9. Cadre métallique selon la revendication 8, dans lequel chaque première paroi latérale (30) est dotée de deux languettes (31).
